# EUROPEAN PATENT SPECIFICATION

(11) **EP 0 425 882 B1**
(45) Date of publication and mention of the grant of the patent: **11.01.1995**
(21) Application number: 90119771.5
(22) Date of filing: 15.10.1990
(51) Int. Cl.: G01N 21/55, G02B 21/00, G02B 21/04

(54) **Infrared microscopic spectrometer**
Spektrometer-Mikroskop für Infrarot
Spectromètre microscopique pour l'infrarouge

(30) Priority: 03.11.1989 JP 286892/89
(43) Date of publication of application: 08.05.1991
(73) Proprietor: HORIBA, LTD., Minami-ku Kyoto (JP)
(72) Inventor: Ukon, Juichiro, Ibaraki-city, Osaka (JP)
(74) Representative: TER MEER STEINMEISTER & PARTNER GbR

(56) References cited:
- EP-A- 0 116 321
- DE-B- 2 462 110
- GB-A- 2 136 594
- US-A- 4 591 266

## Description

The present invention relates to an infrared microscopic spectrometer as claimed in the preamble of claim 1.

An infrared microscopic spectrometer of this kind is already known from US-A-4 591 266. This known spectrometer comprising:
- a light source;
- a condenser mirror for collecting the light emitted from said light source and for irradiating a sample with said collected light;
- an object mirror for focusing the light transmitted through or reflected from said sample;
- a spectrometrical measurement system for receiving and analysing the light focused by said object mirror, said object mirror and said spectrometrical measurement system being contained in an focusing-into-an-image element portion;
- means for disposing an ATR crystal between said condenser mirror and said object mirror so as to carry out an ATR analysis; and
- a transferring mechanism for shifting one of the condenser mirror and the object mirror toward each other in a direction meeting at right angles with an optical axis.

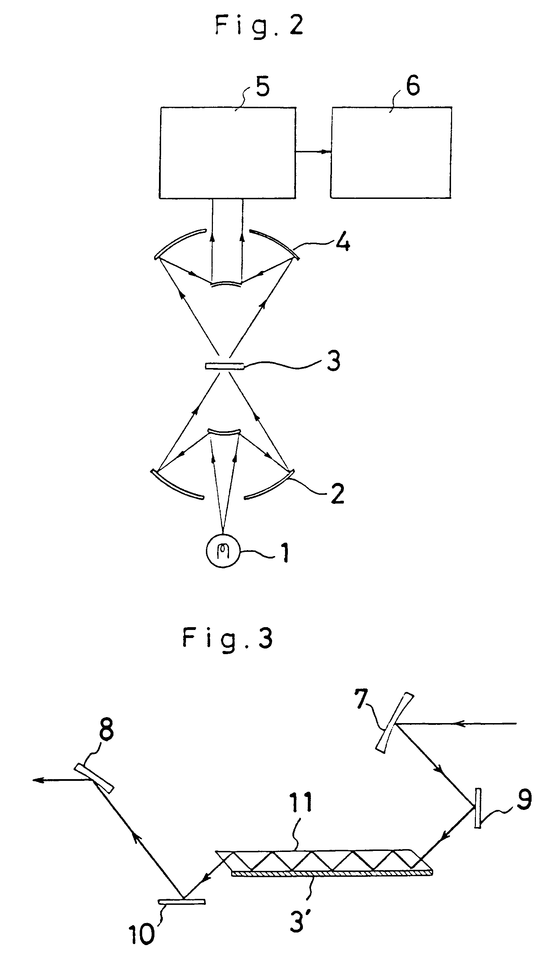

A further conventional infrared microscopic spectrometer is shown in Figure 2. In this spectrometer, infrared rays from a light source 1 are incident upon a sample 3 through a condenser mirror 2 and the transmitted light is enlargedly focussed into an image by means of an object mirror 4. From this light a spectrum is obtained by means of a spectrometer system 5 and a display device 6 in order to conduct an analysis.

Further, for a substance having an extraordinarily strong absorption so that it is difficult to obtain a transmission spectrum and in case where it is difficult to prepare a sample so as to obtain the transmission spectrum and the like the well known ATR (Attenuated Total Reflection) method is applied in the field of infrared spectrometry.

Referring to Fig. 3 roughly showing a part of a general infrared spectrometer for conducting the ATR method, reference numerals 7, 8 designate collecting mirrors and reference numerals 9, 10 designate further mirrors. An optical medium as a reflecting medium having a high refractive index, for example an ATR crystal 11 made of a refractive material, such as KRS-5, germanium and silicon, is disposed in an optical path formed between said mirrors 9, 10 and a sample 3' is disposed on one surface of said ATR crystal 11 and in contact therewith.

In an infrared spectrometer for conducting the ATR method and having the above described construction, when infrared rays from a light source (not shown) are incident upon the ATR crystal 11 via the collecting mirror 7 and the mirror 9, said infrared rays are totally reflected by a contact surface with said sample 3'. However, infrared rays having specified wavelengths are absorbed by an ingredient to be measured in the sample 3' according to a kind of functional group of said ingredient to be measured. On the other hand, infrared rays, which have passed through the ATR crystal 11 and being totally reflected, are incident upon a spectrometer (not shown) via the mirror 10 and the collecting mirror 8 in order to obtain a spectrum corresponding to the ingredient to be measured.

As to the infrared microscopic spectrometer discussed under Fig. 2 infrared rays from the light source 1 are collectedly incident upon the sample 3 by means of the condenser mirror 2 and the transmitted light is enlargedly focused into an image, so that It is natural that the condenser mirror 2 and an object mirror 4 must be coaxially arranged.

On the other hand, as obvious also from Fig. 3, in the ATR method an optical gas of infrared rays incident upon the ATR crystal 11 does not coincide with an optical axis of infrared rays emitted while being totally reflected, so that the ATR method has not been applied to the infared microscopic spectrometer.

Accordingly, it is required to selectively use the apparatus dependent upon the sample to be measured. This had led to a remarkably reduced efficiency.

It is an object of the present invention to provide for an infrared microscopic spectrometer which very easily can change its mode of operation in order to carry out an ATR analysis on the one hand and a conventional transmission analysis on the other hand without the necessity to replace optical elements already mounted in the spectrometer by other optical elements.

The solution of this object is described in the characterizing portion of claim 1.

According to the present invention, the infrared microscopic spectrometer is characterized in that:
- separately from said focusing-into-an-image element portion a collecting element portion is provided containing the light source and the condenser mirror;
- the ATR crystal is to be disposed between the collecting element portion and the focusing-into-an-image element portion; and
- the transfer mechanism is capable of shifting on of the collecting element portion and the focusing-into-an-image element portion toward each other in the said direction.

With the above described characteristic construction, since one of the collecting element portion and the enlargedly focusing-into-an-image element portion can be shifted toward the other in the direction meeting at right angles with the optical axis, the ATR analysis can be carried out by means of the infrared microscopic spectrometer and the apparatus can be efficiently used.

In addition, since also the optical regulation in the measurement by the ATR method can be carried out with observing by the function as an infrared microscope, a highly accurate regulation is possible.

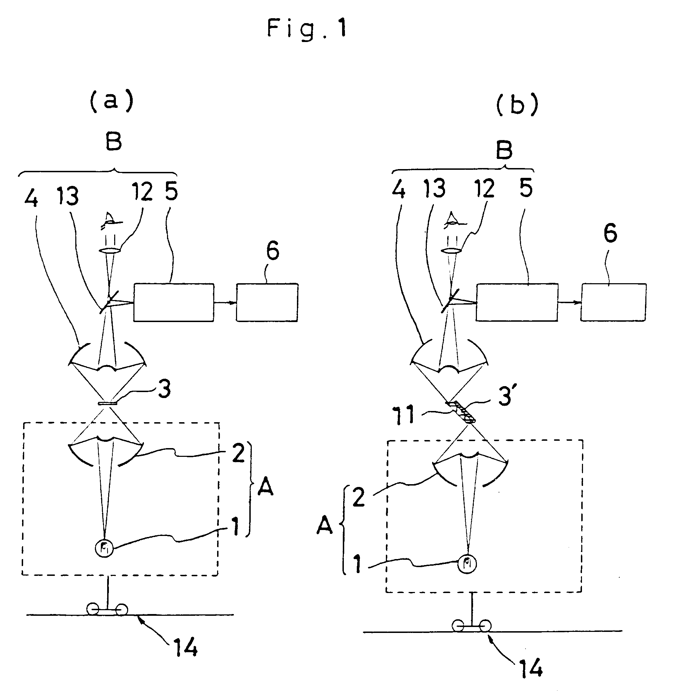

One preferred embodiment of the infrared microscopic spectrometer according to the present invention is shown in Figs. 1(a), 1(b), in which
Fig. 1(a) is an optical arrangement plan for use in the transmission type infrared microscopic spectrometry; and
Fig. 1(b) is an optical arrangement plan for use in the ATR method infrared microscopic spectrometry.

The prior art is shown in Figs. 2, 3, in which
Fig. 2 is an arrangement plan showing the conventional transmission type infrared spectrometer; and
Fig. 3 is an arrangement plan showing the conventional ATR method infrared spectrometer.

The preferred embodiment of the present invention will be described below with reference to the drawings.

Figs. 1(a), 1(b) show one example of a construction of an infrared microscopic spectrometer according to the present invention. Referring to Figs. 1(a), 1(b), same reference numerals as in Fig. 2 and Fig. 3 designate same or corresponding members.

Referring to Fig. 1(a), A designates a collecting element portion consisting of a light source 1 and a condenser mirror 2 and B designates an enlargedly focusing-into-an-image element portion consisting of an object mirror 4, a spectrometrical measurement system 5, an eyepiece 12 and an optical path-change over mirror 13.

Visible rays from the light source 1 are incident upon sample 3 through said condenser mirror 2 and the transmitted light is enlargedly focused into an image by means of said object mirror 4 followed by observing an image of said sample 3 by means of said eyepiece 12.

On the other hand, in the case where the spectrometric measurement is carried out, light is led to said spectrometrical measurement system 5 by changing-over the light source 1 to the infrared ray side and disposing said optical path-change over mirror 13 between the object mirror 4 and the eyepiece 12 to obtain a spectrum by means of the spectrometer within this spectrometrical measurement system 5. The spectrum is displayed by means of a display 6 connected to said system 5.

Here, the infrared microscopic spectrometer shown in Fig. 1(a) is remarkably different form the conventional infrared microscopic spectrometer in that a mechanism capable of shifting the collecting element portion A in the direction meeting at right angles with an optical axis, for example a slide mechanism 14 of manually or automatically shifting the collecting element portion a, is provided.

Accordingly, in the case where the measurement is carried out by the ATR method, a shift between the incident infrared rays and the transmitted infrared ray in optical axis brought about at an ATR crystal 11 is merely compensated by previously transferring the collecting element portion A by means of said slide mechanism 14 to carry out the measurement in the same manner as in the usual transmission type infrared microscopic spectrometer, as shown in Fig. 1(b).

That is to say, visible rays form a light source 1 collected by means of the condenser mirror 2 are incident upon an end face of said ATR crystal 11 provided so as to be brought into contact with a sample 3' and a light emitted while being totally reflected within the ATR crystal 11 is enlargedly focused into an image by means of the object mirror 4. So, said end face of the ATR crystal is observed by means of the eyepiece 12 to carry out the regulation of light passing through the ATR crystal 11 in optical axis.

Subsequently, in the ATR analysis the light source 1 is changed over to the infrared side to lead the light to the spectrometrical measurement system 5 by means of the optical path-changing over mirror 13, whereby carrying out the analysis.

In addition, the slide mechanism 14 is marked at a position of the collecting element portion A for the usual infrared microscopy and a position of the collecting element portion A for the ATR method or a limit switch is provided in the case, where said slide mechanism 14 is transferred by means of a motor and the like, to improve the reproductity.

Although the collecting element portion A is provided with the slide mechanism 14 to be transferred in the present preferred embodiment, the enlargedly focusing-into-an-image element portion B may be provided with the slide mechanism 14 to be transferred.

In addition, although a transmission type infrared microscopic spectrometer is described in the present embodiment, it goes without saving that the present invention can be applied also to a reflection type infrared microscopic spectrometer.

As above described, according to the present invention, the infrared spectrometry by the ATR method can be carried out by means of the infrared microscopic spectrometer by merely transferring either the collecting element portion A or the enlargedly focusing-into-an-image element portion B in the direction meeting at right angles with the optical axis and the apparatus can be efficiently used. In addition, also the optical regulation in the measurement by the ATR method can be very accurately carried out by the function of the infrared microscope.

## Claims

1. An infrared microscopic spectrometer comprising:
- a light source (1);
- a condenser mirror (2) for collecting the light emitted from said light source (1) and for irradiating a sample (3, 3') with said collected light;
- an object mirror (4) for focusing the light transmitted through or reflected from said sample (3, 3');
- a spectrometrical measurement system (5) for receiving and analysing the light focused by said object mirror (4), said object mirror (4) and said spectrometrical measurement system (5) being contained in an focusing-into-an-image element portion (B);
- means for disposing an ATR crystal (3') between said condenser mirror (2) and said object mirror (4) so as to carry out an ATR analysis; and
- a transferring mechanism (14) for shifting one of the condenser mirror (2) and the object mirror (4) toward each other in a direction meeting at right angles with an optical axis,
**characterized in that**
- separately from said focusing-into-an image element portion (B) a collecting element portion (A) is provided containing the light source (1) and the condenser mirror (2);
- the ATR crystal (3') is to be disposed between the collecting element portion (A) and the focusing-into-an-image element portion (B); and
- the transfer mechanism (14) is capable of shifting one of the collecting element portion (A) and the focusing-into-an-image element portion (B) toward the other in the said direction.

2. The infrared microscopic spectrometer as claimed in claim 1, **characterized in that** the light source (1) is able to emit visible light and infrared light, respectively, and an optical path-change over mirror (13) is provided within the focusing-into-an-image element portion (B) for guiding the visible light to an eyepiece (12) and the infrared light to the spectrometrical measurement system (5).

3. The infrared microscopic spectrometer as claimed in claims 1 or 2, **characterized in that** the transferring mechanism (14) is constructed to shift the collecting element portion (A).

4. The infrared microscopic spectrometer as claimed in claims 1, 2 or 3, **characterized in that** marks or limit switches are provided in order to ensure the correct relative position between the portions A and B.

## Patentansprüche

1. Infrarot-Mikroskopspektrometer, mit:
- einer Lichtquelle (1);
- einem Kondensorspiegel (2) zum Sammeln des von der Lichtquelle (1) emittierten Lichts sowie zum Bestrahlen einer Probe (3, 3') mit dem gesammelten Licht;
- einem Objektspiegel (4) zur Fokussierung desjenigen Lichts, das durch die Probe (3, 3') hindurchgegangen oder von dieser reflektiert worden ist;
- einem Spektrometer-Meßsystem (5) zum Empfang sowie zur Analyse des durch den Objektspiegel (4) fokussierten Lichts, wobei der Objektspiegel (4) und das Spektrometer-Meßsystem (5) innerhalb einer Bildfokussierungseinrichtung (B) enthalten sind;
- Mitteln zur Anordnung eines ATR-Kristalls (3') zwischen dem Kondensorspiegel (2) und dem Objektspiegel (4), um eine ATR-Analyse zu ermöglichen; und
- einem Verschiebemechanismus (14) zur Verschiebung entweder des Kondensorspiegels (2) oder des Objektspiegels (4) in einer Richtung senkrecht zu einer optischen Achse;
**dadurch gekennzeichnet**, daß
- getrennt von der Bildfokussierungseinrichtung (B) eine Kollektoreinrichtung (A) vorhanden ist, die die Lichtquelle (1) und den Kondensorspiegel (2) enthält;
- der ATR-Kristall (3') zwischen der Kollektoreinrichtung (A) und der Bildfokussierungseinrichtung (B) positionierbar ist; und
- durch den Verschiebemechanismus (14) entweder die Kollektoreinrichtung (A) oder die Bildfokussierungseinrichtung (B) gegeneinander in der genannten Richtung verschiebbar sind.

2. Infrarot-Mikroskopspektrometer nach Anspruch 1, **dadurch gekennzeichnet**, daß die Lichtquelle (1) entweder sichtbares Licht oder Infrarotlicht emittieren kann, und daß ein den optischen Strahlenweg umschaltender Spiegel (13) innerhalb der Bildfokussierungseinrichtung (B) vorhanden ist, mit dem das sichtbare Licht zu einem Okular (12) und das Infrarotlicht zum Spektrometer-Meßsystem (5) geleitet werden kann.

3. Infrarot-Mikroskopspektrometer nach Anspruch 1 oder 2, **dadurch gekennzeichnet**, daß der Verschiebemechanismus (14) so ausgebildet ist, daß sich durch ihn die Kollektoreinrichtung (A) verschieben läßt.

4. Infrarot-Mikroskopspektrometer nach Anspruch 1, 2 oder 3, **dadurch gekennzeichnet**, daß Markierungen oder Grenzschalter vorhanden sind, um eine korrekte Relativposition zwischen den Einrichtungen (A) und (B) sicherzustellen.

## Revendications

1. Spectromètre microscopique infrarouge, comprenant:
- une source lumineuse (1),
- un miroir condenseur (2) recevant la lumière émise par ladite source lumineuse (1) et éclairant avec ladite lumière un échantillon (3,3'),
- un miroir objet (4) focalisant la lumière transmise à travers ledit échantillon (3, 3') ou réfléchie par ledit échantillon (3, 3'),
- un système de mesure spectroscopique (5) recevant et analysant la lumière focalisée par ledit miroir objet (4), ledit miroir objet (4) et ledit système de mesure spectroscopique (5) étant inclus dans une partie de focalisation d'image (B),
- des moyens de positionnement d'un cristal ATR (réflection totale atténuée) (3') entre ledit miroir condenseur '(2) et ledit miroir objet (4) pour procéder à une analyse ATR; et
- un mécanisme de transport (14) déplaçant l'un ou l'autre du miroir condenseur (2) ou du miroir objet (4), vers l'autre, dans une direction formant un angle droit avec un axe optique,
caractérisé
- en ce qu'il comprend séparément de la partie de focalisation d'image (B) une partie de réception (A) comprenant la source lumineuse (1) et le miroir condenseur (2);
- en ce que le cristal ATR (3') doit être positionné entre la partie de réception (A) et la partie de focalisation d'image (B); et
- en ce que le mécanisme de transport (14) est susceptible de déplacer l'une ou l'autre de la partie de réception (A) ou de la partie de focalisation d'image (B), vers l'autre et dans ladite direction.

2. Spectromètre microscopique infrarouge selon la revendication 1, caractérisé en ce que la source lumineuse (1) peut respectivement émettre de la lumière visible et de la lumière infrarouge, et en ce qu'il comprend un miroir (13) de commutation du chemin optique, dans la partie de focalisation d'image (B), guidant la lumière visible vers un oeilleton (12) et la lumière infrarouge vers le système de mesure spectroscopique (5).

3. Spectromètre microscopique infrarouge selon la revendication 1 ou 2, caractérisé en ce que le mécanisme de transport (14) déplace la partie de réception (A).

4. Spectromètre microscopique infrarouge selon la revendication 1, 2 ou 3 caractérisé en ce qu'il comprend des marques, ou des interrupteurs de fin de course, assurant le positionnement relatif correct entre les parties A et B.
